# EUROPÄISCHE PATENTSCHRIFT

(11) **EP 1 462 280 B1**
(45) Veröffentlichungstag und Bekanntmachung des Hinweises auf die Patenterteilung: **08.02.2006**
(21) Anmeldenummer: 04003732.7
(22) Anmeldetag: 19.02.2004
(51) Int. Cl.: B60D 1/155, B60D 1/44

(54) **Längenveränderbare Zugdeichselanordnung**
Trailer hitch bar adjustable in length
Timon d'attelage ajustable en longueur

(30) Priorität: 29.03.2003 DE 10314239
(43) Veröffentlichungstag der Anmeldung: 29.09.2004
(73) Patentinhaber: Schmitz Gotha Fahrzeugwerke GmbH, 99867 Gotha (DE)
(72) Erfinder: Koch, Josef, 89081 Ulm (DE); Gortan, Björn, 99955 Hornsömmern (DE)
(74) Vertreter: Weber, Gerhard

(56) Entgegenhaltungen:
- EP-A- 0 526 368
- EP-A- 0 600 500
- US-B1- 6 382 656
- US-B1- 6 502 845

## Beschreibung

Die Erfindung betrifft eine längenveränderbare Zugdeichselanordnung mit einem in einem Hauptkörper in Längsrichtung verschiebbar und in verschiedenen Betriebspositionen festlegbar geführten Auszugkörper.

Eine derartige längenveränderbare Zugdeichsetanordnung ist z. B. aus der DE 43 01 055 A1 bekannt, wo ein Innenrohr des Auszugkörpers längsverschiebbar in einem Außenrohr als Hauptkörper geführt ist und in unterschiedlichen Positionen durch Einklemmen kaftschlüssig festgelegt werden kann. Eine aus der DE 41 42 485 A1 bekannte Anordnung sieht ein in einem Außenrohr längsverschiebbar geführtes Innenrohr vor, welches eine Lochreihe in den seitlichen Wänden aufweist und mittels eines durch je ein Loch im Außenrohr und im Innenrohr durchsteckbaren Bolzen in Längsrichtung in unterschiedlichen Betriebspositionen formschlüssig arretierbar ist. Das Außenrohr ist jeweils am Fahrgestell eines Anhängers befestigt.

Der vorliegenden Erfindung liegt die Aufgabe zugrunde, eine vorteilhafte derartige längenveränderbare Zugdeichselanordnung anzugeben.

Die Erfindung ist im Anspruch 1 beschrieben. Die abhängigen Ansprüche enthalten vorteilhafte Ausgestaltungen und Weiterbildungen der Erfindung.

Die Einfügung von Gleitführungsanordnungen mit Kunststoffkörpern zwischen einander vertikal gegenüberstehende Anlageflächen von Auszugkörper und Hauptkörper führt, insbesondere im Vergleich zu den gebräuchlichen Anordnungen mit unmittelbar aneinander liegenden und gleitenden metallischen Anlageflächen, in einer geräusch- und verschleißarmen Anordnung guter Handhabbarkeit. Insbesondere kann die Korrosion der Metalloberflächen, auch im Innern des Hauptkörpers, vermieden werden durch eine korrosionsschützende Oberflächenbehandlung, insbesondere eine Verzinkung, welche durch die Kunststoffkörper langfristig erhalten bleibt. Die Gleitführungsanordnungen halten die einander vertikal gegenüberstehenden Flächen in geringem Abstand und vermeiden eine direkte Berührung der gegenüberstehenden metallischen Anlageflächen. Geeignete Materialkombinationen sind an sich bekannt. Als einander vertikal gegenüberstehende Anlageflächen sind insbesondere die obere Innenfläche des Hauptkörpers von dessen Einschuböffnung her und die obere Außenfäche des Auszugkörpers als obere Anlageflächen sowie die untere Innenfläche des Hauptkörpers und die untere Außenfäche des Auszugkörpers von Bedeutung. Auf Gleitführungsanordnungen mit Kunsttoffkörpern zwischen horizontal gegenüberstehenden Seitenwandflächen kann vorteilhafterweise verzichtet sein.

Vorteilhafterweise ist sowohl zwischen den oberen Anlageflächen als auch zwischen den unteren Anlageflächen wenigstens je eine Gleitführungsanordnung vorhanden. Vorzugsweise sind Gleitführungsanordnungen an wenigstens zwei in Längsrichtung beabstandeten und/oder in Längsrichtung relativ zueinander verschiebbaren Positionen, im folgenden als Stützpositionen bezeichnet, vorgesehen. Bei in Längsrichtung relativ zueinander verschiebbaren Gleitführungsanordnungen ist eine der Gleitführungsanordnungen ortsfest bezüglich des Hauptkörpers und eine andere Gleitführungsanordnung ortsfest bezüglich des Auszugkörpers. Jede Gleitführung kann einen einzigen oder vorzugsweise mehrere beieinander angeordnete Gleitkörper enthalten.

Die Kunststoffkörper wenigstens einer Gleitführungsanordnung bilden vorteilhaft Gleitflächen am seitlichen Rand der Anlageflächen, wo die durch die Kunststoffkörper übertragenen Vertikalkräfte besonders günstig in die vertikalen Seitenwände von Hauptkörper und/oder Auszugkörper einleitbar und Drehmomente um eine horizontale Längsachse besonders vorteilhaft auffangbar sind. Insbesondere kann die wenigstens eine Gleitführungsanordnung zwei seitlich beabstandete, gegen eine vertikale Mittellängsebene der Anordnung seitlich versetzte und vorzugsweise zur Mittellängsebene symmetrisch liegende Kunststoffkörper enthalten. Vorteilhafterweise weisen mehrere oder alle der Gleitführungsanordnungen seitlich zu den Rändern der Anlageflächen versetzte getrennte Kunststoffkörper auf.

Vorteilhafterweise ist eine erste Gleitführungsanordnung in Längsrichtung an einer ersten Stützposition im Bereich des hinteren Endes des Auszugkörpers ortsfest relativ zu diesem zwischen oberen Anlageflächen vorgesehen. Die Stützposition im Bereich des hinteren, dem vorderen außenliegenden Ende des Auszugkörpers mit der Zugöse entgegengesetzten Endes ist vorteilhaft zum Abfangen von Kippmomenten insbesondere in weit ausgezogener Betriebsposition des Auszugkörpers. Die erste Gleitführungsanordnung ist vorteilhafterweise so weit vom hinteren Ende des Auszugkörpers beabstandet, dass, nach Lösen einer gegebenenfalls vorhandenen Auszugbegrenzung, die erste Gleitführungsanordnung am vorderen Ende des Hauptkörpers zum Entnehmen und Einsetzen von Kunststoffkörpern zugänglich ist, solange der Auszugskörper noch mit seinem hinteren Ende in der Einschuböffnung des Hauptkörpers abgestützt ist. Das Maß der Überdeckung der unteren Anlageflächen in Längsrichtung beträgt dabei vorteilhafterweise wenigstens 50 mm. Die Kunststoffkörper der ersten Gleitführungsanordnung sind vorteilhafterweise werkzeuglos entnehmbar bzw. einsetzbar und können hierfür günstigerweise in auf der oberen Außenfläche des Auszugkörpers angeordneten Rahmen formschlüssig parallel zu den Anlageflächen gehalten sein. Die Rahmen können vorteilhaft durch eine aufgeschweißte Platte mit Aussparungen gebildet sein.

Eine zweite Stützposition mit einer zweiten Gleitführungsanordnung ist vorteilhafterweise im Bereich der Einschuböffnung zwischen unteren Anlageflächen vorgesehen und ortsfest bezüglich des Hauptkörpers. Die zweite Gleitführungsanordnung weist in Längsrichtung von der Einschuböffnung eine Erstrekkung auf, welche vorteilhafterweise wenigstens 30 %, insbesondere wenigstens 40 % der Längsverschiebbarkeit des Auszugkörpers, d. h. der Wegdifferenz in Längsrichtung zwischen den extremen Betriebspositionen (der Betriebsposition mit am weitesten ausgezogenen und der Betriebsposition mit am weitesten eingeschobenen Auszugkörper) betragen kann. Vorteilhafterweise kann die Erstreckung der ersten Gleitführungsanordnung in Längsrichtung so auf die Schwerpunktlage des Auszugkörpers abgestimmt sein, dass der Schwerpunkt in allen Betriebspositionen innerhalb eines Bereichs des Hauptkörpers liegt, welcher die Längserstreckung der zweiten Gleitführungsanordnung um nicht mehr als 40 %, insbesondere am nicht mehr als 25 % überragt.

Die Kunststoffkörper der zweiten Gleitführungsanordnung bilden vorteilhafterweise in Längsrichtung durchgehende Auflageflächen für den Auszugkörper und sind vorzugsweise in Längsrichtung einstückig durchgehend Die Kunststoffkörper sind vorteilhafterweise mittels in Durchbrüche in der unteren Anlagefläche des Hauptkörpers ragende Fixierelemente in Längsrichtung formschlüssig im Hauptkörper gehalten, vorzugsweise mittels Schrauben als Fixierelemente von außen zugänglich verschraubt.

Vorteilhafterweise ist an einer dritten Stützposition im Bereich der Einführungsöffnung eine dritte Gleitführungsanordnung zwischen oberen Anlageflächen vorgesehen, welche ortsfest bezüglich des Hauptkörpers ist. Die dritte Stützposition liegt vorteilhafterweise der zweiten Stützposition vertikal gegenüber, wobei die Längserstreckung der dritten Gleitführungsanordnung aber klein ist gegen die Längserstreckung der zweiten Gleitführungsanordnung und insbesondere kleiner sein kann als die Breite der Anlageflächen. Die dritte Gleitführungsanordnung kann vorteilhafterweise an einer von oben an dem Hauptkörper lösbar befestigten Platte, im folgenden als Niederhalterplatte bezeichnet, angeordnet sein. Durch Befestigen der Niederhalterplatte am Hauptkörper liegt die dritte Gleitführungsanordnung mit ihren Kunststoffkörpern auf der oberen Außenfäche des Auszugkörpers, so dass dieser im wesentlichen spielfrei vertikal zwischen zweiter und dritter Gleitführungsanordnung gehalten ist. Die Abstützung an den Kunststoffkörpern der Niederhalterplatte ermöglicht vorteilhafterweise auch einen Ausgleich von Fertigungstoleranzen in der Höhe des Auszugskörpers und/oder des Hauptkörpers durch Zwischenfügen von Distanzblechen zwischen oberer Fläche des Hauptkörpers und Niederhalterplatte und/oder Unterlagscheiben zwischen Niederhalterplatte und Kunststoffkörpern und/oder durch Wahl zwischen unterschiedlich dicken Kunststoffkörpern.

Die dritte Gleitführungsanordnung kann vorteilhafterweise mit Rahmen, welche die Kunststoffkörper parallel zu den Anlageflächen halten, durch Aussparungen in der oberen Anlagefläche des Hauptkörpers hindurchragen. Vorteilhafterweise sind diese Aussparungen größer als die Kunststoffkörper der ersten Gleitführungsanordnung, so dass diese Kunststoffkörper auch durch diese Aussparungen in die erste Gleitführungsanordnung einsetzbar bzw. entnehmbar sind, wenn der Auszugskörper entsprechend weit ausgezogen wird und dabei noch in der zweiten Gleitführungsanordnung sicher nach unten abgestützt ist.

Die dritte Gleitführungsanordnung kann vorteilhafterweise zugleich als Begrenzungsanschlag für die Längsverschiebung des Auszugkörpers relativ zum Hauptkörper dienen und dabei mit Gegenanschlagelementen auf der oberen Anlagefläche des Auszugkörpers zusammenwirken.

Weitere Gleitführungsanordnungen können zusätzlich vorgesehen sein.

Der Auszugkörper ist vorzugsweise in mehreren diskreten Betriebspositionen in Längsrichtung relativ zum Hauptkörper formschlüssig festlegbar. Hierfür kann insbesondere ein horizontal in eine von mehreren Aussparungen in einer Seitenwand des Auszugskörpers eingreifendes Arretiermittel, wie z. B. ein Bolzen am Hauptkörper befestigt sein. Das Arretierelement ist vorzugsweise federbelastet selbsthaltend und selbstarretierend, wenn bei der Längsverschiebung des Auszugskörpers relativ zum Hauptkörper die nächste diskrete Betriebsposition erreicht ist.

Zusätzlich zu der Längsverschiebbarkeit des Auszugkörpers relativ zum Hauptkörper kann vorteilhafterweise vorgesehen sein, dass der Hauptkörper in Längsrichtung in mehreren Positionen relativ zum Fahrgestell eines Anhängers befestigt sein kann, wobei vorzugsweise die mittleren Abstände in Längsrichtung benachbarter Befestigungspositionen kleiner sein können als die mittleren Abstände benachbarter Betriebspositionen des Auszugkörpers relativ zum Hauptkörper und/oder wobei die Anzahl der Befestigungspositionen größer ist als die Anzahl der Betriebspositionen.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Auszugskörper in Seitenansicht,
- Fig. 2: den Auszugskörper nach Fig. 1 in Draufsicht,
- Fig. 3: den Auszugskörper nach Fig. 1 in Ansicht von hinten,
- Fig. 4: einen Hauptkörper in Seitenansicht,
- Fig. 5: den Hauptkörper nach Fig. 4 in Draufsicht,
- Fig. 6: den Hauptkörper nach Fig. 4 in Ansicht von vorn,
- Fig. 7: eine zusammengesetzte Anordnung in Seitenansicht,
- Fig. 8: die Anordnung nach Fig. 7 in Draufsicht.

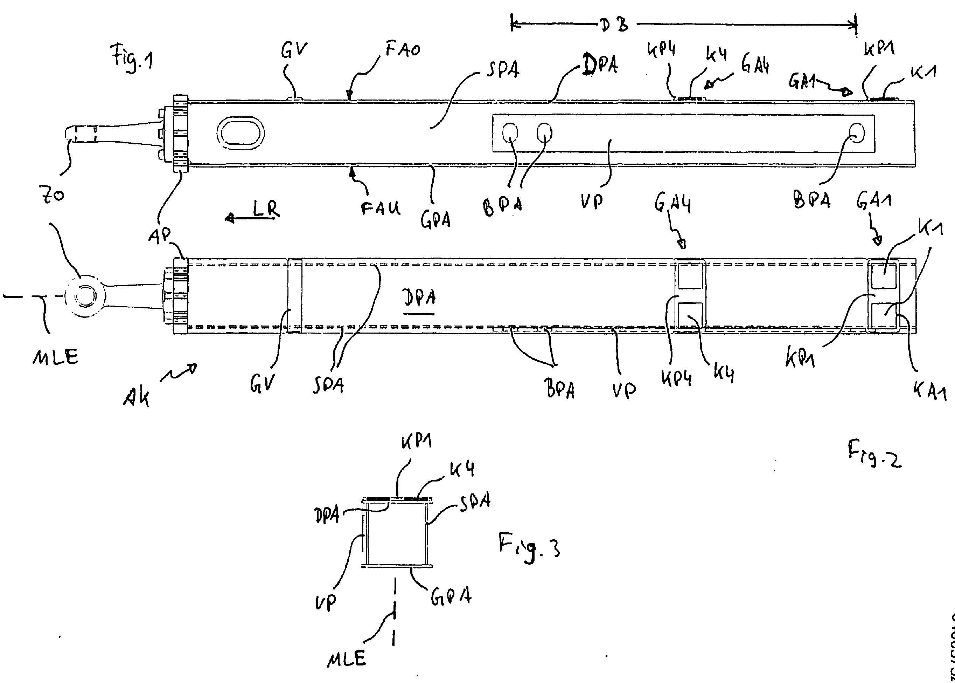

Der in Fig. 1 in Seitenansicht und in Fig. 2 in Draufsicht skizzierte Auszugskörper AK ist vorzugsweise als Schweißkonstruktion mit einer Deckplatte DPA, einer Grundplatte GPA und Stegblechen SPA als Seitenwänden aufgebaut, wobei diese Elemente einen Hohlkörper mit über seine Länge im wesentlichen gleichbleibenden, aus der Ansicht von hinten nach Fig. 3 anschaulich ersichtlichen Querschnitt bilden. Die Seitenwände sind geringfügig gegen die Seitenkanten von Grundplatte und Deckplatte zur vertikalen Mittellängsebene MLE hin versetzt. Der Hohlkörper ist an seinem vorderen Ende durch eine aufgeschweißte Anschraubplatte AP abgeschlossen, an welche eine Zugöse ZO angeschraubt ist.

Im Bereich des hinteren Endes des Auszugskörpers ist auf der oberen Fläche FAO des Auszugskörpers eine erste Gleitführungsanordnung GA1 angeordnet, welche vorteilhafterweise eine auf die Fläche FAO aufgeschweißte Platte KP1 mit Aussparungen KA1 und in diese eingelegte konturangepasste Kunststoffkörper K1 enthält. Die Kunststoffkörper stehen nach oben über die Platte KP1 hinaus. Die Kunststoffkörper sind seitlich gegen die vertikale Mittellängsebene MLE zum seitlichen Rand der Deckplatte DPA hin versetzt. Die Kunststoffkörper sind zum Auswechseln einfach aus dem durch die Aussparungen gebildeten Rahmen entnehmbar.

Von der ersten Gleitführungsanordnung GA1 in Längsrichtung nach vorne beabstandet ist eine vierte Gleitführungsanordnung GA4, welche mit einer aufgeschweißten Platte KP4 und in deren Aussparungen eingelegten Kunststoffkörpern KK gleich aufgebaut sei wie die erste Gleitführungsanordnung, angeordnet. Die vierte Gleitführungsanordnung bildet vorteilhaft in später noch näher beschriebener Weise ein Gegenelement zu einem Anschlagelement für einen Begrenzung der Längsverschiebbarkeit des Auszugskörpers in aus dem Hauptkörper ausziehender Richtung und kann ferner, insbesondere bei mit ausgezogenem Auszugskörper, die Lage des Auszugskörpers stabilisieren. Ein weiteres Gegenelement zur Begrenzung des Einschiebens des Auszugskörpers in den Hauptkörper ist z. B. als quer zur Längsrichtung auf die Fläche FAO aufgeschweißte Platte GV im vorderen Bereich des Auszugskörpers vorgesehen.

In einer Seitenwand des Auszugskörpers sind mehrere Aussparungen BPA entsprechend mehreren vorgesehenen diskreten Betriebspositionen in Längsrichtung LR beabstandet eingebracht. Auf die Seitenwand mit den Aussparungen ist eine Verstärkungsplatte VP mit zu den Aussparungen BPA der Seitenwand fluchtenden Aussparungen aufgeschweißt, welche zum einen die Aussparungsränder verstärkt und zum anderen eine eventuelle Schwächung der Seitenwand durch die Aussparungen kompensiert. Die Verstärkungsplatte VP liegt seitlich innerhalb der durch Grund- und Deckplatte bestimmten Breite des Auszugskörpers.

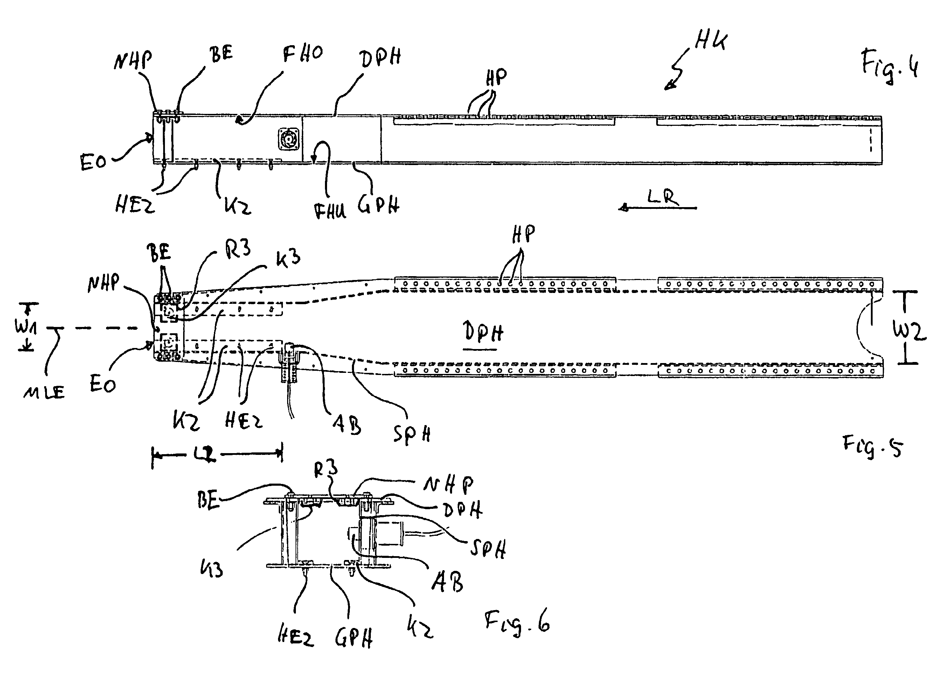

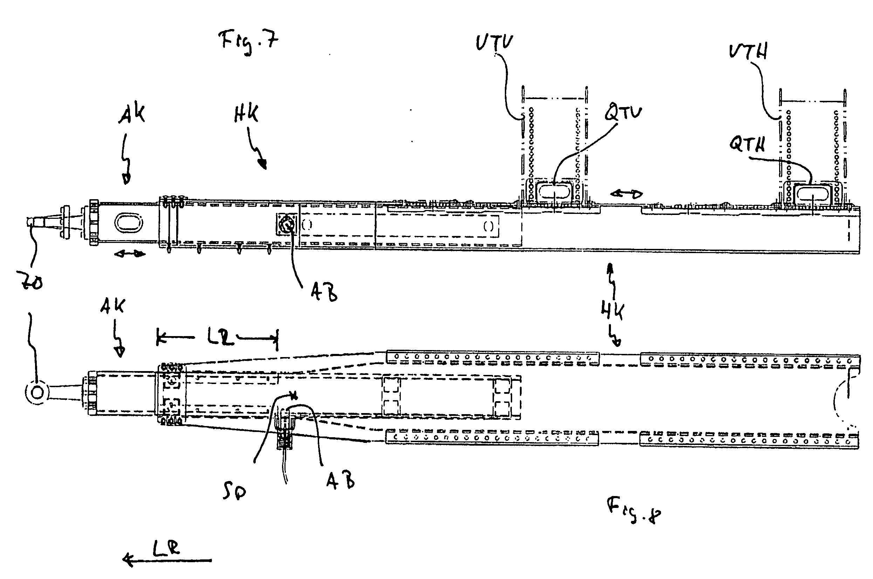

Der in Fig. 4 in Seitenansicht und in Fig. 5 in Draufsicht dargestellte Hauptkörper HK ist gleichfalls vorzugsweise als Schweißkonstruktion mit einer Grundplatte GPH, einer Deckplatte DPH und Seitenwänden SPH ausgeführt. Der durch diese Elemente gebildete Hohlkörper zeigt über seine Länge eine konstante Höhe HH, aber eine variierende lichte Weite, welche von einer den Außenmaßen des Querschnitts des Auszugskörpers angepaßten, von der vorderen Einschuböffnung EO her in einem ersten Führungsabschnitt konstanten Weite W1 sich über einen konischen Abschnitt aufweitet in eine größere Weite W2 in einen hinteren Abschnitt, in welchem in der Deckplatte DPH Strukturen als Lochraster HP zur längsverstellbaren Befestigung des Hauptkörpers an einem Fahrgestell eines Anhängers. Die Höhe des Hauptkörpers kann bei den im gewählten Beispiel gegebenen Stützpositionen hinter dem ersten Führungsabschnitt aber auch durch einen nach unten abgesenkten Verlauf der Grundplatte GPH nach hinten vergrößert sein.

An einer Seitenwand SPH ist ein federbelasteter Bolzen AB als Arretierelement zum lösbaren Eingriff in eine der Aussparungen BPA in der Seitenwand des Auszugskörpers befestigt, mittels dessen der Auszugskörper in Längsrichtung unterschiedlichen diskreten Betriebspositionen relativ zum Hauptkörper festlegbar ist.

Eine zweite Gleitführungsanordnung ist in Form von langgestreckten Kunststoffkörpern K2 an der unteren Innenfläche FHU des Hauptkörpers in dem Führungsabschnitt bei der Einschuböffnung EO vorgesehen. Die Kunststoffkörper K2 beginnen im wesentlichen bei der Einschuböffnung und erstrecken sich parallel zur Längsrichtung in den Hauptkörper hinein über eine Länge L2, welche vorteilhafterweise wenigstens 30 %, insbesondere wenigstens 40 % des Abstands DB der am weitesten auseinander liegenden Aussparungen BPA im Auszugskörper beträgt. Die Kunststoffkörper K2 sind von der Mittellängsebene MLE zu den Seitenwänden SPH hin versetzt. Die Kunststoffkörper K2 sind gegen Verschieben in der Fläche FHU formschlüssig gesichert, wofür im skizzierten Beispiel Schrauben HE2 in die Kunststoffkörper eingesenkt und durch Bohrungen in der Grundplatte GPH hindurch geführt und von außen zugänglich festgeschraubt sind.

Auf der Deckplatte DPH ist bei der Einschuböffnung EO eine Niederhalterplatte NHP von oben aufgesetzt und über Schrauben BE befestigt. An der Unterseite der Niederhalterplatte NHP sind nach unten abstehende Rahmen R3 angeordnet, in welche Kunststoffkörper K3 eingelegt sind. Die Kunststoffkörper ragen nach unten über die Rahmen hinaus. Die Rahmen greifen in Aussparungen in der Deckplatte DPH ein und ragen vorzugsweise nach unten unter die obere Anlagefläche FHO des Hauptkörpers hinaus, wie insbesondere aus der Ansicht nach Fig. 6 von vorne auf den Hauptkörper anschaulich ist. In zusammengesetztem Zustand der Zugdeichselanordnung liegt der Auszugskörper vorzugsweise vertikal spielfrei oder mit geringem vertikalem Spiel mit seiner unteren Anlagefläche FAU auf den Kunststoffkörpern K2 der zweiten Gteitführungsanordnung auf und ist an einem Ausweichen nach oben durch die Kunststoffkörper K3 der dritten Gleitführungsanordnung an seiner oberen Anlagefläche FAO und durch die Kunststoffkörper K1 der ersten Gleitführungsanordnung an der oberen Anlagefläche FHO des Hauptkörpers gehindert. Beim Ausziehen des Ausziehkörpers in Längsrichtung LR aus dem Hauptkörper ist die Ausziehbewegung begrenzt durch Anschlag der Platte KP4 der vierten Gteitführungsanordnung an den von der Niederhalterplatte NAP unter die obere Anlagefläche FHO des Hauptkörpers ragenden Rahmen R3. Bei Verschieben des Auszugskörpers in entgegen gesetzter Richtung ist das Einschieben des Auszugskörpers in den Hauptkörper begrenzt durch Anschlag der Anschlagplatte GV auf der oberen Anlagefläche des Auszugskörpers an die Rahmen R3. Zum weiteren Ausziehen des Auszugskörpers AK aus dem Hauptkörper HK kann durch Lösen der Befestigungselemente BE die Niederhalterplatte nach oben abgehoben werden. Wenn vorteilhafterweise die Kunststoffkörper K1 und/oder K4 von ihren Umrissen kleiner sind als die für die Rahmen R3 in der Deckplatte DPH vorhandenen Aussparungen, können die Kunststoffkörper bereits durch die Aussparungen entnommen bzw. eingesetzt werden, ohne dass der Auszugskörper weiter ausgezogen werden muss, was insbesondere zum Austausch der Kunststoffkörper K1 der ersten Gleitführungsanordnung von Vorteil ist.

Eine aus einem Hauptkörper HK und einem in diesen eingeschobenen Auszugskörper AK zusammengesetzte Zugdeichselanordnung ist in Fig. 7 in Seitenansicht und in Fig. 8 in Draufsicht skizziert. Der Auszugskörper ist dabei in einer weit eingeschobenen Betriebsposition relativ zum Hauptkörper gezeichnet. In Fig. 7 sind zusätzlich Befestigungselement ein Form von vorderen und hinteren Konsolen VTV, VTH und daran höhenverstellbar befestigten vorderen und hinteren Querträgern eines Anhängerfahrgestells eingezeichnet. Der Hauptkörper ist über die Lochreihen HP an korrespondierenden Lochmustem der Querträger in in Längsrichtung verschiedenen Befestigungspositionen befestigbar, wobei die Abstände benachbarter Befestigungspositionen durch die Lochabstände der Lochreihen HP gegeben sind, welche vorteilhafterweise wesentlich geringer sind als die mittleren Abstände benachbarter Betriebspositionen des Auszugskörpers relativ zum Hauptkörper entsprechend den Abständen der Aussparungen BPA in der Seitenwand des Auszugskörpers.

Die mit SP angedeutete ungefähre Lage des Schwerpunkts des Auszugskörpers in der skizzierten extremen Einschubposition liegt nahe bei den langgestreckten Kunststoffkörpern K2 und nur wenig, vorteilhafterweise weniger als 40 %, insbesondere weniger als 25 % der Längserstreckung L2 von den Kunststoffkörpern K2 entfernt, so dass das Gewicht des Auszugkörpers zuverlässig an den Kunststoffkörpern K2 der zweiten Gleitführungsanordnung und K3 der dritten Gleitführungsanordnung abstützbar ist und eine weitere Abstützung im hinteren Bereich des Auszugskörpers zwischen den unteren Anlageflächen FAU, FHU entbehrlich ist.

Auszugkörper und Hauptkörper weisen vorteilhafterweise eine korrosionsschützende Oberflächenbehandlung auf, insbesondere in Form einer Verzinkung der Oberfläche, insbesondere auch an den inneren Flächen des Hauptkörpers.

## Patentansprüche

1. Längenveränderbare Zugdeichselanordnung mit einem in einem Hauptkör per (HK) in Längsrichtung verschiebbar und in verschiedenen Betriebspositionen festlegbar geführten Auszugkörper (AK), **dadurch gekennzeichnet, dass** an wenigstens zwei Stützpositionen Gleitführungsanordnungen mit Kunststoffkörpern zwischen einander vertikal gegenüberstehenden Anlageflächen (FAO, FHO bzw. FAU, FHU) des Hauptkörpers und des Auszugskörpers eingefügt sind.

2. Anordnung nach Anspruch 1, **dadurch gekennzeichnet, dass** an wenigstens zwei in Längsrichtung relativ zueinander verschiebbaren Stützpositionen Gleitführungsanordnungen vorgesehen sind.

3. Anordnung nach Anspruch 1 oder 2, **dadurch gekennzeichnet, dass** die Kunststoffkörper wenigstens einer Gleitführungsanordnung Gleitflächen am seitlichen Rand der Anlageflächen bilden.

4. Anordnung nach einem der Ansprüche 1 bis 3, **dadurch gekennzeichnet, dass** wenigstens eine Gleitführungsanordnung mindestens zwei gegen eine Mittenlängsachse der Anlageflächen versetzte Kunststoffkörper umfasst.

5. Anordnung nach einem der Ansprüche 1 bis 4, **dadurch gekennzeichnet, dass** eine erste Stützposition mit einer ersten Gleitführungsanordnung (GA1) im Bereich des hinteren Endes des Auszugkörpers zwischen oberen Anlageflächen (FAO, FHO) vorgesehen ist.

6. Anordnung nach Anspruch 5, **dadurch gekennzeichnet, dass** die erste Gleitführungsanordnung so weit vom hinteren Ende des Auszugkörpers beabstandet ist, dass bei an der Einschuböffnung des Hauptkörpers zugänglicher erster Gleitführungsanordnung der Auszugskörper mit seinem hinteren Ende noch in dem Hauptkörper abgestützt ist.

7. Anordnung nach Anspruch 5 oder 6, **dadurch gekennzeichnet, dass** der oder die Kunststoffkörper (K1) der ersten Gleitführungsanordnung werkzeuglos entnehmbar und einsetzbar sind.

8. Anordnung nach einem der Ansprüche 5 bis 7, **dadurch gekennzeichnet, dass** die erste Gleitführungsanordnung einen den oder die Kunststoffkörper parallel zu den oberen Anlageflächen formschlüssig haltenden Rahmen (KA1) bilden.

9. Anordnung nach einem der Ansprüche 5 bis 8, **dadurch gekennzeichnet, dass** die erste Gleitführungsanordnung eine auf der oberen Anlagefläche des Auszugkörpers befestigte Platte (KP1) beinhaltet, welche Durchbrüche (KA1) aufweist, in welchen die Kunststoffkörper (K1) einliegen.

10. Anordnung nach einem der Ansprüche 1 bis 9, **dadurch gekennzeichnet, dass** eine zweite Stützposition mit einer zweiten Gleitführungsanordnung im Bereich des oberen Endes des Hauptkörpers zwischen unteren Anlageflächen vorgesehen ist.

11. Anordnung nach Anspruch 10, **dadurch gekennzeichnet, dass** die zweite Gleitführungsanordnung in Längsrichtung eine Ausdehnung (L2) aufweist, welche wenigstens 30 %, insbesondere wenigstens 40 % der Differenz (DB) der extremen Betriebsposition in Längsrichtung beträgt.

12. Anordnung nach Anspruch 10 oder 11, **dadurch gekennzeichnet, dass** der Schwerpunkt des Auszugskörpers in allen Betriebspositionen in Längsrichtung innerhalb eines Bereichs des Hauptkörpers liegt, welcher die Längserstreckung der zweiten Gleitführungsanordnung um nicht mehr als 40 %, insbesondere nicht mehr als 25 % dieser Längserstreckung überragt.

13. Anordnung nach einem der Ansprüche 10 bis 12, **dadurch gekennzeichnet, dass** der bzw. die Kunststoffkörper (K2) der zweiten Gleitführungsanordnung in Längsrichtung (LR) über die Längserstreckung durchgehend, insbesondere einstückig durchgehend sind.

14. Anordnung nach einem der Ansprüche 10 bis 13, **dadurch gekennzeichnet, dass** der bzw. die Kunststoffkörper (K2) über von der Außenseite des Hauptkörpers zugänglichen Verschraubungen (HE2) mit dem Hauptkörper verbunden sind.

15. Anordnung nach einem der Ansprüche 1 bis 14, **dadurch gekennzeichnet, dass** eine dritte Gleitführungsanordnung im Bereich des vorderen Endes des Hauptkörpers zwischen oberen Anlageflächen (FAO, FHO) vorgesehen ist.

16. Anordnung nach Anspruch 15, **dadurch gekennzeichnet, dass** die dritte Gleitführungsanordnung an einer von oben am Hauptkörper lösbar befestigten Niederhalterplatte (NHP) angeordnet ist.

17. Anordnung nach Anspruch 15 oder 16, **dadurch gekennzeichnet, dass** die Niedefialterplatte (NHP) nach unten offene Aufnahmen (R3) für Kunststoffkörper (K3) aufweist.

18. Anordnung nach Anspruch 17, **dadurch gekennzeichnet, dass** die Aufnahmen als Rahmenwände aufgebaut sind, welche durch Aussparungen der oberen Anlagefläche des Hauptkörpers hindurchragen.

19. Anordnung nach einem der Ansprüche 16 bis 18, **dadurch gekennzeichnet, dass** die dritte Gleitführungsanordnung als Begrenzungsanschlag für die Längsverschiebung des Auszugkörpers relativ zum Hauptkörper dient.

20. Anordnung nach einem der Ansprüche 1 bis 19, **dadurch gekennzeichnet, dass** der Auszugkörper relativ zum Hauptkörper in Längsrichtungen in mehreren diskreten Betriebspositionen formschlüssig festlegbar ist.

21. Anordnung nach Anspruch 20, **dadurch gekennzeichnet, dass** zur formschlüssigen Festlegung des Auszugkörpers relativ zum Hauptkörper an letzterem Arretiermittel (AB) angeordnet sind, welche in Strukturen des Auszugkörpers formschlüssig eingreifen.

22. Anordnung nach Anspruch 21, **dadurch gekennzeichnet, dass** die Arretiermittel ein federbelastet selbstarretierend in die Strukturen (BPA) des Auszugkörpers eingreifendes Element enthalten.

23. Anordnung nach einem der Ansprüche 1 bis 22, **dadurch gekennzeichnet, dass** der Hauptkörper in Längsrichtung relativ zu dem Fahrgestell eines Anhängers verschiebbar und in verschiedenen Stellungen am Fahrgestell festlegbar ist.

## Claims

1. Trailer hitch bar arrangement adjustable in length, having an extension body (AK), which is guided in a manner such that it can be displaced in the longitudinal direction in a main body (HK) and can be fixed in various operating positions, **characterized in that** at at least two positions of support, slideway arrangements with plastic bodies are fitted between mutually vertically opposite bearing surfaces (FAO, FHO and FAU, FHU) of the main body and of the extension body.

2. Arrangement according to Claim 1, **characterized in that** slideway arrangements are provided at at least two positions of support which are displaceable relative to one another in the longitudinal direction.

3. Arrangement according to Claim 1 or 2, **characterized in that** the plastic bodies of at least one slideway arrangement form sliding surfaces on the lateral edge of the bearing surfaces.

4. Arrangement according to one of Claims 1 to 3, **characterized in that** at least one slideway arrangement comprises at least two plastic bodies offset with respect to a central longitudinal axis of the bearing surfaces.

5. Arrangement according to one of Claims 1 to 4, **characterized in that** a first position of support with a first slideway arrangement (GA1) is provided in the region of the rear end of the extension body between upper bearing surfaces (FAO, FHO).

6. Arrangement according to Claim 5, **characterized in that** the first slideway arrangement is spaced apart from the rear end of the extension body to an extent such that, with the first slideway arrangement accessible at the push-in opening of the main body, the extension body is still supported by its rear end in the main body.

7. Arrangement according to Claim 5 or 6, **characterized in that** the plastic body or the plastic bodies (K1) of the first slideway arrangement can be removed and inserted without a tool.

8. Arrangement according to one of Claims 5 to 7, **characterized in that** the first slideway arrangement forms a frame (KA1) holding the plastic body or the plastic bodies in a positive-locking manner parallel to the upper bearing surfaces.

9. Arrangement according to one of Claims 5 to 8, **characterized in that** the first slideway arrangement contains a plate (KP1) which is secured on the upper bearing surface of the extension body and has apertures (KA1) in which the plastic bodies (K1) lie.

10. Arrangement according to one of Claims 1 to 9, **characterized in that** a second position of support is provided with a second slideway arrangement in the region of the upper end of the main body between lower bearing surfaces.

11. Arrangement according to Claim 10, **characterized in that** the second slideway arrangement has an extent (L2) in the longitudinal direction amounting to at least 30%, in particular at least 40%, of the difference (DB) between the extreme operating positions in the longitudinal direction.

12. Arrangement according to Claim 10 or 11, **characterized in that** the centre of gravity of the extension body in all operating positions in the longitudinal direction is situated within a region of the main body which protrudes over the longitudinal extent of the second slideway arrangement by no more than 40%, in particular no more than 25%, of this longitudinal extent.

13. Arrangement according to one of Claims 10 to 12, **characterized in that** the plastic body or the plastic bodies (K2) of the second slideway arrangement are continuous in the longitudinal direction (LR) over the longitudinal extent, in particular are continuous in a single piece.

14. Arrangement according to one of Claims 10 to 13, **characterized in that** the plastic body or the plastic bodies (K2) are connected to the main body via screw connections (HE2) accessible from the outside of the main body.

15. Arrangement according to one of Claims 1 to 14, **characterized in that** a third slideway arrangement is provided in the region of the front end of the main body between upper bearing surfaces (FAO, FHO).

16. Arrangement according to Claim 15, **characterized in that** the third slideway arrangement is arranged on a hold-down plate (NHP) fastened releasably to the main body from above.

17. Arrangement according to Claim 15 or 16, **characterized in that** the hold-down plate (NHP) has downwardly open receptacles (R3) for plastic bodies (K3).

18. Arrangement according to Claim 17, **characterized in that** the receptacles are constructed as frame walls which protrude through cutouts in the upper bearing surface of the main body.

19. Arrangement according to one of Claims 16 to 18, **characterized in that** the third slideway arrangement serves as a boundary for the longitudinal displacement of the extension body relative to the main body.

20. Arrangement according to one of Claims 1 to 19, **characterized in that** the extension body can be fixed relative to the main body in a positive-locking manner in longitudinal directions in a plurality of discrete operating positions.

21. Arrangement according to Claim 20, **characterized in that** locking means (AB) which engage in a positive-locking manner in structures of the extension body are arranged on the main body in order to fix the extension body relative thereto in a positive-locking manner.

22. Arrangement according to Claim 21, **characterized in that** the locking means contain an element which engages in a spring-loaded and self-locking manner in the structures (BPA) of the extension body.

23. Arrangement according to one of Claims 1 to 22, **characterized in that** the main body can be displaced in the longitudinal direction relative to the chassis of a trailer and can be fixed to the chassis in various positions.

## Revendications

1. Arrangement de timon d'attelage à longueur variable comprenant un corps de rallonge (AK) pouvant coulisser dans un corps principal (HK) dans le sens de la longueur et pouvant être bloqué dans différentes positions opérationnelles, **caractérisé en ce que** des arrangements de guidage glissants munis de corps en matière plastique sont insérés en au moins deux positions supports entre des surfaces d'appui opposées l'une à l'autre dans le sens vertical (FAO, FHO ou FAU, FHU) du corps principal et du corps de rallonge.

2. Arrangement selon la revendication 1, **caractérisé en ce que** des arrangements de guidage glissants sont prévus en au moins deux positions supports pouvant coulisser l'une par rapport à l'autre dans le sens de la longueur.

3. Arrangement selon la revendication 1 ou 2, **caractérisé en ce que** les corps en matière plastique d'au moins un arrangement de guidage glissant forment des surfaces de glissement sur le bord latéral des surfaces d'appui.

4. Arrangement selon l'une des revendications 1 à 3, **caractérisé en ce qu'**au moins un arrangement de guidage glissant comprend au moins deux corps en matière plastique décalés par rapport à un axe longitudinal central des surfaces d'appui.

5. Arrangement selon l'une des revendications 1 à 4, **caractérisé en ce qu'**une première position support munie d'un premier arrangement de guidage glissant (GA1) est prévue dans la zone de l'extrémité arrière du corps de rallonge entre les surfaces d'appui supérieures (FAO, FHO).

6. Arrangement selon la revendication 5, **caractérisé en ce que** le premier arrangement de guidage glissant est écarté de l'extrémité arrière du corps de rallonge au point que le corps de rallonge est encore soutenu dans le corps principal avec son extrémité arrière au niveau du premier arrangement de guidage glissant accessible à l'orifice d'introduction du corps principal.

7. Arrangement selon la revendication 5 ou 6, **caractérisé en ce que** le ou les corps en matière plastique (K1) du premier arrangement de guidage glissant peuvent être retirés et mis en place sans outils.

8. Arrangement selon l'une des revendications 5 à 7, **caractérisé en ce que** le premier arrangement de guidage glissant forme un cadre (KA1) qui maintient par engagement géométrique le ou les corps en matière plastique parallèles aux surfaces d'appui supérieures.

9. Arrangement selon l'une des revendications 5 à 8, **caractérisé en ce que** le premier arrangement de guidage glissant comprend une plaque (KP1) fixée sur la surface d'appui supérieure du corps de rallonge, laquelle présente des traversées (KA1) dans lesquelles pénètrent les corps en matière plastique (K1).

10. Arrangement selon l'une des revendications 1 à 9, **caractérisé en ce qu'**il est prévu une deuxième position support avec un deuxième arrangement de guidage glissant dans la zone de l'extrémité supérieure du corps principal entre les surfaces d'appui inférieures.

11. Arrangement selon la revendication 10, **caractérisé en ce que** le deuxième arrangement de guidage glissant présente dans le sens longitudinal une extension (L2) qui est au moins égale à 30 %, particulièrement au moins égale à 40 % de la différence (DB) de la position opérationnelle extrême dans le sens longitudinal.

12. Arrangement selon la revendication 10 ou 11, **caractérisé en ce que** le barycentre du corps de rallonge dans toutes les positions opérationnelles dans le sens longitudinal se trouve dans une zone du corps principal qui ne dépasse pas de l'extension longitudinale du deuxième arrangement de guidage glissant de plus de 40 %, notamment de plus de 25 % de cette extension longitudinale.

13. Arrangement selon l'une des revendications 10 à 12, **caractérisé en ce que** le ou les corps en matière plastique (K2) du deuxième arrangement de guidage glissant sont ininterrompus dans le sens longitudinal (LR) sur l'extension longitudinale, notamment ininterrompus d'une seule pièce.

14. Arrangement selon l'une des revendications 10 à 13, **caractérisé en ce que** le ou les corps en matière plastique (K2) sont reliés avec le corps principal par le biais d'assemblages vissés (HE2) accessibles depuis le côté extérieur du corps principal.

15. Arrangement selon l'une des revendications 1 à 14, **caractérisé en ce qu'**il est prévu un troisième arrangement de guidage glissant dans la zone de l'extrémité avant du corps principal entre les surfaces d'appui supérieures (FAO, FHO).

16. Arrangement selon la revendication 15, **caractérisé en ce que** le troisième arrangement de guidage glissant est disposé sur une plaque serre-flan (NHP) fixée de manière amovible par le haut au corps principal.

17. Arrangement selon la revendication 15 ou 16, **caractérisé en ce que** la plaque serre-flan (NHP) présente des creux (R3) ouverts vers le bas pour les corps en matière plastique (K3).

18. Arrangement selon la revendication 17, **caractérisé en ce que** les creux sont réalisés sous la forme de parois de cadre qui font saillie à travers des creux de la surface d'appui supérieure du corps principal.

19. Arrangement selon l'une des revendications 16 à 18, **caractérisé en ce que** le troisième arrangement de guidage glissant sert de butée de limitation pour le coulissement longitudinal du corps de rallonge par rapport au corps principal.

20. Arrangement selon l'une des revendications 1 à 19, **caractérisé en ce que** le corps de rallonge peut être bloqué par engagement géométrique par rapport au corps principal dans plusieurs positions opérationnelles discrètes dans le sens longitudinal.

21. Arrangement selon la revendication 20, **caractérisé en ce que** pour le blocage par engagement géométrique du corps de rallonge par rapport au corps principal, des moyens d'arrêt (AB) sont disposés sur ce dernier, lesquels pénètrent par engagement géométrique dans des structures du corps de rallonge.

22. Arrangement selon la revendication 21, **caractérisé en ce que** les moyens d'arrêt comprennent un élément autobloquant à ressort qui pénètre dans les structures (BPA) du corps de rallonge.

23. Arrangement selon l'une des revendications 1 à 22, **caractérisé en ce que** le corps principal peut coulisser dans le sens longitudinal par rapport au châssis d'une remorque et peut être bloqué dans différentes positions sur la remorque.
